# EUROPEAN PATENT SPECIFICATION

(11) **EP 1 662 950 B1**
(45) Date of publication and mention of the grant of the patent: **29.09.2010**
(21) Application number: 03818334.9
(22) Date of filing: 13.08.2003
(51) Int. Cl.: A47J 27/00, B23K 20/04, B32B 15/18, B32B 15/20

(54) **BONDED METAL COMPONENTS HAVING UNIFORM THERMAL CONDUCTIVITY CHARACTERISTICS AND METHOD OF MAKING SAME**
GEBONDETE METALLBAUTEILE MIT EINHEITLICHEN WÄRMELEITFÄHIGKEITSEIGENSCHAFTEN UND HERSTELLUNGSVERFAHREN DAFÜR
COMPOSANTS METALLIQUES LIES A CARACTERISTIQUES DE CONDUCTIVITE THERMIQUE UNIFORMES, ET PROCEDE DE FABRICATION

(43) Date of publication of application: 07.06.2006
(73) Proprietor: All-Clad Metalcrafters LLC, Canonsburg, PA 15317 (US)
(72) Inventor: GROLL, William, A., McMurray, PA 15317 (US)
(74) Representative: Barton, Matthew Thomas
(86) International application number: PCT/US2003/025400
(87) International publication number: WO 2005/018393

(56) References cited:
- JP-A- 8 096 946
- JP-A- 11 267 030
- US-A- 3 340 597
- US-A- 3 340 597
- US-A- 3 788 513
- US-A- 3 788 513
- US-A- 3 966 426
- US-A- 3 966 426
- US-A- 4 541 411
- US-A- 4 541 411
- US-A- 4 646 935
- US-A- 4 646 935
- US-A- 5 532 460
- US-A- 5 532 460
- US-A- 5 952 112
- US-A- 5 952 112
- US-A1- 2004 058 188
- US-B1- 6 267 830

## Description

### BACKGROUND OF THE INVENTION

### Field of the Invention

The present invention relates generally to composite bonded metal cookware, griddle plate or a sole plate for an iron and, more particularly, to bonded composite metal cookware, griddle plate or a sole plate for an iron or the like, having at least one inner metal layer possessing a lower coefficient of thermal conductivity than the other metal layers of the composite so as to cause the heat to saturate in that layer prior to being transferred to the cook or ironing surface. In this manner, hot spots in the cook surface or iron are eliminated so as to improve the performance of the appliance and extend the life of a non-stick surface, if present.

### Description of Related Art

It is well known in the art to manufacture multi-layered, composite bonded metal cookware of a variety of metals, most commonly aluminum and/or copper for good heat conductivity along with outer layers of stainless steel for appearance, wear resistance and corrosion resistance. It is also known to employ a layer of a ferro-magnetic material, such as carbon steel or a 400 series ferritic stainless steel in place of the more common 300 series austenitic stainless steel if the cookware is to be used on an induction cooking device. All of these combinations are disclosed in the prior art as taught, for example, in Ulam U.S. Patent No. 4,646,935; in McCoy et al. U.S. Patent No. 3,966,426; and Groll U.S. Pat. No. 6,267,830.

It is also well-known in the art to coat the cook surface or ironing sole plate surface with a non-stick material such as PTFE ("Teflon®") or the like. Hot spots may rapidly develop in cookware and sole plates for irons due to the use of conventional metals such as aluminum, copper and stainless steel alone or in composite form. These hot spots not only are troublesome in cooking and ironing but they also cause an accelerated thermal degradation of the non-stick surface. Even if no non-stick surface is present, localized hot spots are undesirable in cookware, since it leads to unequalized cooking.

An attempt to minimize hot spots in cookware is disclosed in U.S. Pat. No. 4,541,411 to Woolf. A multi-ply cookware pan is disclosed by Woolf having inner and outer plies of aluminum or stainless steel enclosing an intermediate ply of a graphite material. The graphite material is not metallurgically bonded to the adjacent metal layers but has thermally anisotropic properties and is oriented so that its thermal conductivity is higher in a plane parallel to the cookware surface than it is in the direction perpendicular to the surface to minimize hot spots on the cooking surface.

Since the graphite layer of Woolf is not metallurgically bonded to the adjacent aluminum and stainless steel layers, and because the aluminum and stainless steel layers are not themselves bonded along the cook surface (due to the intermediate graphite ply), the resultant cookware of Woolf would suffer certain shortcomings. First, due to the non-bonded graphite ply, slight air gaps most probably would be present between the graphite ply and the adjacent layers of aluminum and stainless steel which act as a thermal insulator by way of a barrier or film effect so as to lower the efficiency and uniformity of heat transfer across the interface. In addition, due to the lack of metallurgical bonding between the aluminum and stainless steel layers along the cooking surface of the Woolf cookware, one would expect some thermal warping to occur by virtue of the difference in thermal expansion coefficients of aluminum and stainless steel.
US 3,340,597 discloses a method of bonding stainless steel and aluminum including a method of cladding aluminum sheet, plate or strip with stainless steel by means of hot or cold rolling.

My invention overcomes the problems encountered in the prior art in attempting to eliminate hot spots and achieve more uniform heating across cook surfaces and other applications such as sole plates for ironing (all of which are hereinafter collectively referred to merely as "cookware"). In addition, my invention increases the life of non-stick surfaces by eliminating the hot spot problem of the prior art. Still further, the heat-retardant layer of my invention contributes to the flatness of the cooking vessel during heat-up of multi-layer composites which heretofore might be present due to differences in thermal expansion coefficients of the several layers of different metals in the composite

### SUMMARY OF THE INVENTION

Briefly stated, my invention provides composite, bonded metal cookware having outer layers of aluminum and/or stainless steel with a core construction comprising a layer of a heat-retardant metal such as titanium, titanium alloy, stainless steel or the like, bonded on both sides to one of a layer of pure aluminum or a layer of Alclad aluminum. My invention also includes the method of making said bonded components. In one presently preferred construction, a titanium Ti 46 alloy strip having a thickness of about 0,76 - 0,89 mm (0.030 - 0.035 inch) is bonded on both surfaces to strips of Alclad aluminum each having a thickness of about 0,89 - 1,02 mm (0.035 - 0.040 inch), with a layer of 304 stainless steel 0,38 - 0,43 mm (0.015 - 0.017 inch) bonded to each of the outer surfaces of the Alclad aluminum. Prior to roll bonding, the surfaces of the strips of the above materials are mechanically abraded by wire brush, wheel or the like to clean the surfaces and expose bare, unoxidized metal. The sheets are stacked in the following order: stainless steel layer - Alclad layer - titanium layer (or stainless steel layer) - Alclad layer - stainless steel layer; the stack may then be heated or soaked to a temperature of 288° - 316°C (550°F - 600°F) in an oxygen-containing atmosphere (regular atmosphere), or at a higher temperature in an O₂-free atmosphere furnace. A temperature below about 550°F fails to provide a Ti bond during rolling, while a temperature above about 316°C (600°F) causes the formation of Ti oxides in an oxygen-containing furnace atmosphere. Such oxides prevent sound metallurgical bonding.

The so-heated, ordered stack of sheets is then hot rolled in a first pass in a rolling mill while at 288 - 316°C (550°F - 600°F) in the oxygen-containing atmosphere at a reduction of at least 5% up to 10% to achieve a bond between the Ti and Al, and between the Al and the outer stainless steel layers. The bonded pack can then be reheated if necessary and rolled in a second pass at a 10-20% reduction. The finished composite is then preferably heat treated at 343° - 371°C (650°F - 700°F) to improve the bonding strength by way of diffusion bonding between adjacent layers.

The material so processed can then be blanked and formed by way of drawing in a conventional manner into the desired cookware shapes.

Comparative thermographic imaging of the composite material of the present invention indicates a uniformity of heating across the inner cook surface which is free of hot spots.

If induction cookware is desired, a layer of ferro-magnetic material, such as carbon steel of a 400 series ferritic stainless steel, can be applied to the outer (lower) surface of the cookware, i.e., that surface which is closest to the inductor. In addition, a non-stick surface can be applied to the cook surface or iron sole plate surface on the stainless steel layer or, alternatively, along an aluminum layer, if desired.

### BRIEF DESCRIPTION OF THE DRAWINGS

Figure 1 is a cross-sectional view of one presently preferred embodiment of a bonded metal composite according to the invention; and

Figures 2-3 are cross-sectional views of other presently preferred embodiments of the invention similar to Figure 1.

### DETAILED DESCRIPTION OF THE INVENTION

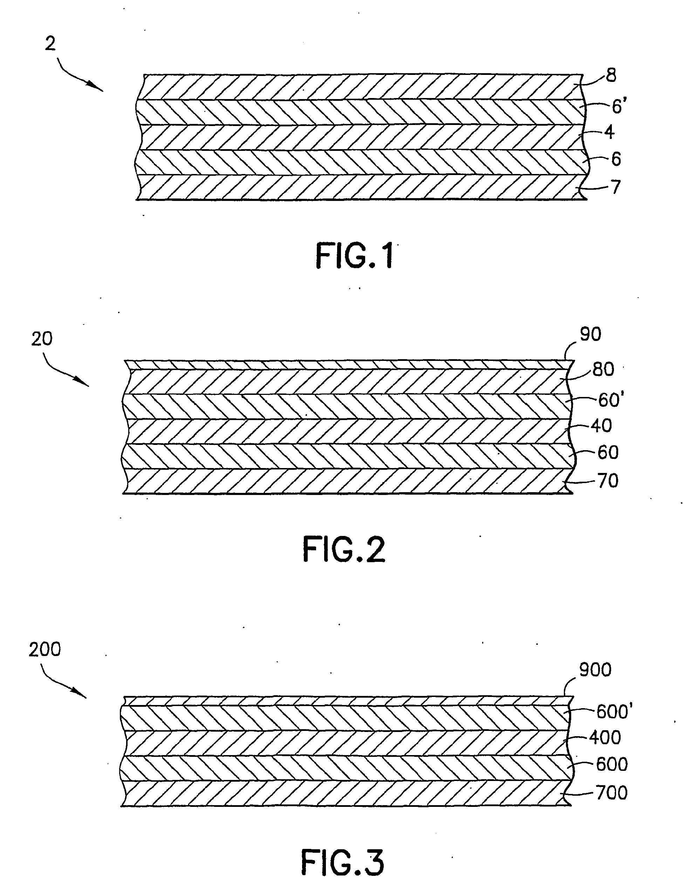

With reference now to the appended drawings, Fig. 1 schematically depicts, in cross section, one preferred embodiment of a bonded metal composite sheet 2 of the present invention. The composite sheet 2 is a multi-layered, rolled bonded construction comprising a layer 4 of a material having a lower coefficient of thermal conductivity than the other metal layers in the composite sheet 2. The presently preferred material for the lower thermal conductivity layer 4 is titanium or titanium alloy because of its relatively lower heat conductivity coefficient compared with the aluminum coupled with its light weight, which is comparable to aluminum. Stainless steel has a coefficient of heat conductivity similar to that of titanium and may be used for the layer 4. Stainless steel is less expensive than titanium but is heavier, adding to the weight of the cooking vessel. In the composite sheet 2 of Figure 1, the titanium layer 4 is roll bonded on both sides between aluminum layers 6 and 6'. The aluminum layers 6 and 6' comprise pure aluminum of the 1100 series or the layers 6 and 6' may be Alclad aluminum sheet. Alclad aluminum is made from an aluminum alloy core, such as 3003 alloy, roll bonded to outer layers of pure aluminum. The 3003 aluminum alloy core provides improved strength while the outer layers of pure aluminum provide good roll bonding properties. For improved roll bonding, the titanium layer (or stainless steel) 4 should be bonded to a layer of pure aluminum. It will be understood that when reference is made hereinafter to the titanium layer, that stainless steel could be substituted therefor, as well. The aluminum layers 6, 6' in the embodiment of Fig. 1 are, in turn, roll bonded to layers 7 and 8 of stainless steel.

The stainless steel layer 8 defines the inner cook surface of the composite sheet 2 of Figure 1 and is preferably made from an austenitic stainless steel such as type 304 stainless steel which offers good corrosion resistance and deep drawing properties. The outer stainless steel layer 7 is directly adjacent to the heat source and may also be made from an austenitic grade of stainless steel such as 304 or from aluminum (brushed, polished or anodized). If the cookware is to be used for induction type cooking, then the outer layer 7 is made from a ferromagnetic material, such as carbon steel or from a ferritic stainless steel, or from a composite containing a ferritic stainless steel or carbon steel. A presently preferred ferritic stainless steel for use in layer 8 is selected from the 400 series of stainless steels such as type 409 stainless steel. A roll bonded composite comprising a layer of a 400 series ferritic stainless steel sandwiched between layers of 300 series austenitic stainless steel may also be used for layer 8 when the cooking vessel is intended for use with an induction cooking range. Of course, such induction cookware can also be used with conventional gas or electric ranges.

Additional presently preferred embodiments of my invention are depicted in Figures 2 and 3 wherein the roll bonded composite sheets of my invention are identified by reference numerals 20 and 200, respectively. In the one presently preferred embodiment of Figure 2, the roll bonded composite sheet 20 comprises a layer of titanium or titanium alloy 40 roll bonded to layers 60 and 60' of aluminum or Alclad aluminum which, in turn, are roll bonded to layers of stainless steel 70 and 80. The lower layer 70 may be one of austenitic or ferritic stainless steel or a composite, i.e., a layer 70 of ferritic stainless steel with a further outer layer of austenitic stainless steel (not shown) roll bonded thereto, all as described above with reference to Figure 1 and composite sheet 2.

The layer 90 of Figure 2 defines the cook surface and is a non-stick surface such as a Teflon®-brand PTFE or the like. Other surfaces such as TiN or ZrN ceramic nitride non-stick surfaces as disclosed in U.S. Patent No. 6,360,423 to Groll, or a diamond surface applied by laser as disclosed in U.S. Patent No. 5,731,046 of Mistic et aL may also be employed as surface 90. The non-stick surface may be applied to the stainless steel layer 80 or, alternatively, directly to the aluminum layer 60' in which case stainless layer 80 would be omitted as described below with reference to Figure 3.

A further presently preferred embodiment of the invention is depicted as roll bonded composite metal sheet 200 in Figure 3. In this embodiment a layer of titanium or titanium alloy 400 is roll bonded to layers 600 and 600' of pure aluminum or Alclad aluminum. The layer 600' of aluminum or Alclad aluminum which is adjacent to the cook surface is coated with a layer 900 of non-stick material, as described above, applied thereto. The lower surface of the composite 200 closest to the heat source of the cooking range receives a layer 700 of austenitic or ferritic stainless steel. Alternatively, the outermost layer 700 may be a layer of roll bonded aluminum preferably having an anodized outer surface for scratch resistance and improved appearance.

In all of the embodiments of the roll bonded composites 2, 20 and 200 discussed above, the respective titanium layers 4, 40 and 400 (or stainless steel layers) act to retard the heat transfer from the heat source acting as surfaces 7, 70 and 700 to the cook surfaces 8, 90 and 900. The titanium layers 4, 40 and 400 act as a "heat dam" or thermal buffer and cause the temperature to conduct laterally or radially, as opposed to perpendicularly through the aluminum layers 6, 60 and 600. The heat is not conducted directly through the aluminum layers as in conventional composite cookware by virtue of the titanium layers. In this manner, the present invention prevents the occurrence of hot spots on the cooking surface. The titanium layer, by virtue of its lower coefficient of thermal conductivity, acts as a thermal buffer and allows the heat to become more uniform along a radial direction in the aluminum layers 6, 60 and 600 and then permits the heat to transfer by conduction uniformly through the aluminum layers 6', 60' and 600' to the cooking surface. In addition to avoiding hot spots along a horizontal cook surface, the titanium layers 4, 40 and 400 provide for uniform temperature distribution along the vertical sidewall of a deep drawn pot or pan since the titanium layers form an integral part of the composite sheet 2, 20 and 200 which is used to draw the cookware.

Titanium is an ideal layer for the thermal buffer or heat dam layers 4, 40 and 400 in cookware manufacture because titanium has a relatively low density, comparable to aluminum, and, thus, does not add appreciable weight to the cookware. In addition, titanium roll bonds well to the aluminum and stainless steel layers and has a coefficient of thermal expansion which is compatible with the other metals of the composite sheet 2, 20 and 200 so that thermally induced warping of the cookware is avoided.

Roll bonding the titanium layer 4, 40 and 400 to the adjacent aluminum layers 6 and 6', 60 and 60', and 600 and 600' assures a metallurgically continuous bond across the entire composite (free of air gaps). Accordingly, the thermal transfer/conductivity across the bonded interfaces between the aluminum layers 6, 60 and 600 and the titanium layers 4, 40 and 400 and, thence, between the titanium layers 4, 40 and 400 and the respective aluminum layers 6', 60' and 600' is uniform.

By way of example, and in no way limiting the scope of my invention, the composite sheet 2 of Figure 1 may be made as follows. A pure titanium or titanium alloy sheet such as a Ti-Al alloy, designated Ti-46 alloy, of about 0,89 mm (0.035 inch) thick is provided to form layer 4. Both surfaces of the Ti sheet forming layer 4 are mechanically abraded using a wire brush or wheel or the like to expose the bare unoxidized metal. Two sheets of Alclad aluminum forming layers 6 and 6' having a thickness of between 0,89 - 1,02 mm (0.035 - 0.040) inch are also abrasively or wire wheel ground or abraded to expose the underlying unoxidized pure aluminum and placed on both sides of the titanium. The sheets 7 and 8 of type 304 stainless steel having a thickness of about 0,38 - 0,43 mm (0.015 - 0.017 inch) are conditioned, cleaned and placed on either side of the Alclad aluminum layers 6 and 6', respectively. The stacked array of layers 7, 6, 4, 6' and 8 is then heated in a regular atmosphere oven or furnace (containing atmospheric O₂) and heated to a temperature of between about 288° - 316° (550°F to 600°F) so that the stacked array is uniformly soaked within that temperature range. A temperature of below about 288°C (550°F) will provide an inadequate roll bond while a temperature in excess of about 316°C (600°F) causes the formation of Ti-oxide (in an O₂ furnace atmosphere) which also proves detrimental to roll bonding. Of course, if the heating and rolling is conducted in an O₂ free atmosphere or environment, then preheating and rolling can be conducted at temperatures in excess of 316°C (600°F). Such O₂ free atmospheres or environments, however, add to the expense of the process, which may be commercially unattractive.

The stacked array of sheets comprising layers 7, 6, 4, 6' and 8 is preheated within a temperature range of 288°C - 316°C (550°F to 600°F) and then immediately rolled (also in an O₂ atmosphere) in a rolling mill in a first rolling pass of 5-10% reduction to effect a bond between the layers of the array. The once hot rolled array is then subjected to a second hot roll pass through the rolling mill at a further reduction of between 10-20%. The thus rolled array is then at the desired finish thickness of about 0,25 mm (0.100 inch), for example, and returned to a furnace for a thermal treatment at 343° - 371°C (650°-700°F) for about 4-8 minutes to improve the diffusion bonding between the adjacent layers. This treatment causes a greater interatomic sharing of electrons between adjacent layers to provide excellent bond integrity, uniformity and strength.

The roll bonded composite 2 is then processed in a conventional manner to make cookware of desired configurations and sizes. The well-known manufacturing steps for making cookware involves the conventional steps of blanking, drawing, buffing and the like and are in and of themselves well-known in the metal working art.

The above-described layers 4, 40 and 400 forming the thermal buffer or heat dam, as mentioned, preferably consist of titanium, titanium alloy or stainless steel. The type of stainless steel is not particularly limited and may be either a ferritic grade or an austenitic grade, for example, of the 400 or 300 series, respectively, which offer good formability. The ferritic grades, having ferromagnetic properties, are also advantageous if the cooking utensil is to be used in connection with an induction heating range. Still other metals may also be used as the head dam or thermal buffer layer 4, 40 or 400 as long as the other metal has a coefficient of thermal conductivity lower than the other high heat conductivity layer.

While specific embodiments of the invention have been described in detail, it will be appreciated by those skilled in the art that various modifications and alternatives to those details could be developed in light of the overall teachings of the disclosure. The presently preferred embodiments described herein are meant to be illustrative only and not limiting as to the scope of the invention which is to be given the full breadth of the appended claims.

## Claims

1. Cookware made from a drawn multi-layered composite metal sheet (2), said composite sheet (2) comprising a plurality of roll bonded metal layers, **characterized by** including a core layer (4) of either titanium, titanium alloy or stainless steel, said layer (4) core having a coefficient of thermal conductivity lower than immediately adjacent metal layers (6), (6') of pure aluminium or Alclad aluminum bonded on both sides of said core layer (4) whereby said core layer (4) retards heat flow in a transverse direction to cause said core layer to distribute heat in a lateral direction and thereby provide uniform heating across a cooking surface of the cookware which is free of hot spots.

2. Cookware according to Claim 1, in the form of a cooking vessel or griddle plate, wherein a layer (8) of stainless steel is bonded to a first of the pure aluminum or Alclad aluminum layers (6') to define a cooking surface and a layer (7) of one of an austenitic stainless steel or a ferromagnetic material is bonded to a second of the pure aluminum or Alclad aluminum layers (6) to define an outer layer for positioning adjacent to a heat source.

3. Cookware according to Claim 1, wherein the cookware is made from a bonded metal composite (2) **characterized by** comprising:
(a) a core layer (4) of stainless steel;
(b) upper and lower layers (6'), (6) consisting of pure aluminium or Alclad aluminum, each layer roll bonded to upper and lower sides of said core layer;
(c) a further layer (8) of stainless steel roll bonded to the upper layer (6') of the pure aluminum or Alclad aluminum to define a cook surface of said cookware; and
(d) a further layer (7) of stainless steel or aluminum roll bonded to the lower layer (6) of pure aluminum, or Alclad aluminum to define an outer surface of said cookware.

4. The cookware of Claim 3, wherein said further layer (7) defining the outer surface of said cookware is a layer of anodized aluminum.

5. The cookware of Claim 3 or 4, wherein the further layer (8) which defines the cook surface has a non-stick layer (90) applied thereto.

6. Cookware according to Claim 1, wherein the cookware is made from a bonded metal composite (2) comprising:
(a) a core layer (4) consisting of titanium or titanium alloy; and
(b) two outer layers (6), (6') consisting of pure aluminum or Alclad aluminum, each layer roll bonded to upper and lower sides of said core layer (4).

7. The cookware of any of Claims 3, 5 or 6, wherein the further layer (7) defining the outer surface of said cookware is a ferromagnetic stainless steel layer, whereby the cookware may be heated by induction.

8. The cookware of claim 7 wherein the further layer (7) of ferromagnetic stainless steel has a brushed surface finish.

9. The cookware of claim 8 wherein the further layer (8) which defines the cook surface has a non-stick layer (90) applied thereto.

10. Cookware according to Claim 1, wherein the cookware is made from a bonded metal composite (200) comprising:
(a) a layer (600') of pure aluminum or Alclad aluminum;
(b) a layer (400) of stainless steel bonded to layer (a);
(c) a layer (600) of pure aluminum or Alclad aluminum bonded to layer (b);
(d) a layer (700) of stainless steel bonded to layer (c); and
(e) a layer of pure aluminum or Alclad aluminum bonded to layer (d).

11. The cookware of Claim 10 wherein layer (a) (600') has a non-stick surface applied thereto.

12. The cookware of Claim 11 wherein layer (e) has an anodized surface.

13. A method of making cookware made from a multi-layered composite metal sheet (2) **characterized by** comprising the steps of:
(a) providing a plurality of metal sheets including a core layer (4) comprising a sheet of titanium, titanium alloy or stainless steel and two sheets (6), (6') selected from the group consisting of pure aluminum and Alclad aluminum;
(b) preparing said metal sheets by removing an oxide surface layer from surfaces thereof;
(c) stacking said metal sheets in an ordered array such that adjacent sheets having surfaces prepared from step (b) are facing each other and wherein the titanium, titanium alloy or stainless steel sheet is sandwiched between the layers (6), (6') of pure aluminum or Alclad aluminum sheets and forms a core layer (4) of the ordered array;
(d) heating said ordered array to a uniform rolling temperature throughout said array;
(e) rolling said ordered array to a desired thickness to form a roll bonded composite sheet (2); and
(f) drawing said roll bonded composite to form cookware of a desired configuration, whereby said core layer (4) retards heat flow in a transverse direction to cause said layer (4) to distribute heat in a lateral direction and thereby provide uniform heating across a cook surface of the cookware which is free of hot spots.

14. The method of Claim 13 wherein the ordered array of stacking step (c) comprises: a first sheet (8) of stainless steel facing a first sheet (6') of pure aluminum or Alclad aluminum, a core layer (4) of titanium or titanium alloy sheet having a first side facing the first sheet (6') of aluminum or Alclad aluminum, a second sheet (6) of pure aluminum or Alclad aluminum facing a second side of the core layer (4) of titanium or titanium alloy, and a second sheet (7) of stainless steel facing the second sheet (6) of aluminum or Alclad aluminum.

15. A method according to any of Claims 13 to 14, wherein in step (d), the ordered array is heated in a furnace or oven containing atmospheric oxygen to a rolling temperature of between 288-316°C (550° to 600°F).

16. A method according to any of Claims 13 to 15, wherein the rolling step (e) comprises a first rolling reduction of at least 5% to about 10% followed by reheating to about 288-316°C (550° to 600°F), rolling a second pass, and thereafter heat treating at about 343-371 °C (650°-700°F) to improve bonding strength in the multi-layered composite metal sheet.

17. The method of any of Claims 13 to 16, including the step of applying a non-stick layer (90) to a cook surface of the cookware.

## Patentansprüche

1. Kochgeschirr, das aus einem tiefgezogenen mehrschichtigen Kompositmetallblech (2) besteht, wobei das Kompositblech (2) eine Vielzahl walzplattierter Metallschichten umfasst, die **dadurch gekennzeichnet sind, dass** sie eine Kernschicht (4) entweder aus Titan, einer Titanlegierung oder rostfreiem Stahl umfassen, wobei der Kern der Schicht (4) einen Wärmeleitfähigkeitskoeffizienten aufweist, der niedriger ist als unmittelbar benachbarte Metallschichten (6), (6') aus reinem Aluminium oder Alclad-Aluminium, die mit beiden Seiten der Kernschicht (4) verschweißt sind, wodurch die Kernschicht (4) Wärmefluss in Querrichtung hemmt, um die Kernschicht zu veranlassen, Wärme in Längsrichtung zu verteilen und **dadurch** eine gleichförmige Erwärmung der gesamten Kochfläche des Kochgeschirrs bereitzustellen, die keine überhitzten Stellen aufweist.

2. Kochgeschirr nach Anspruch 1 in Form eines Kochtopfs oder einer Grillplatte, wobei eine Schicht (8) aus rostfreiem Stahl mit einer ersten der reinen Aluminium oder Alclad-Aluminiumschichten (6') verschweißt ist, um eine Kochfläche abzugrenzen, und eine Schicht (7) aus rostfreiem Austenitstahl oder einem ferromagnetischen Material mit einer zweiten der reinen Aluminium oder Alclad-Aluminiumschichten (6) verschweißt ist, um eine Außenschicht zur Anordnung benachbart zu einer Wärmequelle abzugrenzen.

3. Kochgeschirr nach Anspruch 1, wobei das Kochgeschirr aus einem verschweißten Metallkomposit (2) besteht, das **dadurch gekennzeichnet ist, dass** es Folgendes umfasst:
(a) eine Kernschicht (4) aus rostfreiem Stahl;
(b) eine obere und untere Schicht (6'), (6), die aus reinem Aluminium oder Alclad-Aluminium besteht, wobei jede Schicht an die obere und untere Seite der Kernschicht walzplattiert ist;
(c) eine weitere Schicht (8) aus rostfreiem Stahl, die an die obere Schicht (6') aus reinem Aluminium oder Alclad-Aluminium walzplattiert ist, um eine Kochfläche des Kochgeschirrs zu definieren; und
(d) eine weitere Schicht (7) aus rostfreiem Stahl oder Aluminium, die an die untere Schicht (6) aus reinem Aluminium oder Alclad-Aluminium walzplattiert ist, um eine Außenfläche des Kochgeschirrs zu definieren.

4. Kochgeschirr nach Anspruch 3, wobei die weitere Schicht (7), die die Außenfläche des Kochgeschirrs definiert, eine Schicht aus eloxiertem Aluminium ist.

5. Kochgeschirr nach Anspruch 3 oder 4, wobei auf die weitere Schicht (8), die die Kochfläche definiert, eine Antihaftschicht (90) aufgetragen ist.

6. Kochgeschirr nach Anspruch 1, wobei das Kochgeschirr aus einem verschweißten Metallkompositmaterial (2) besteht, das Folgendes umfasst:
(a) eine Kernschicht (4), die aus Titan oder einer Titanlegierung besteht; und
(b) zwei Außenschichten (6), (6'), die aus reinem Aluminium oder Alclad-Aluminium bestehen, wobei jede Schicht an eine obere und untere Seite der r Kernschicht (4) walzplattiert ist.

7. Kochgeschirr nach einem der Ansprüche 3, 5 oder 6, wobei die weitere Schicht (7), die die Außenfläche des Kochgeschirrs definiert, eine Schicht aus rostfreiem ferromagnetischem Stahl ist, wodurch das Kochgeschirr durch Induktion erwärmt werden kann.

8. Kochgeschirr nach Anspruch 7, wobei die weitere Schicht (7) aus rostfreiem ferromagnetischem Stahl eine gebürstete Oberfläche aufweist.

9. Kochgeschirr nach Anspruch 8, wobei auf die weitere Schicht (8), die die Kochfläche definiert, eine Antihaftschicht (90) aufgetragen ist.

10. Kochgeschirr nach Anspruch 1, wobei das Kochgeschirr aus einem verschweißten Metallkompositmaterial (200) besteht, das Folgendes umfasst:
(a) eine Schicht (600') aus reinem Aluminium oder Alclad-Aluminium;
(b) eine Schicht (400) aus rostfreiem Stahl, die mit der Schicht (a) verschweißt ist;
(c) eine Schicht (600) aus reinem Aluminium oder Alclad-Aluminium, die mit der Schicht (b) verschweißt ist;
(d) eine Schicht (700) aus rostfreiem Stahl, die mit der Schicht (c) verschweißt ist; und
(e) eine Schicht aus reinem Aluminium oder Alclad-Aluminium, die mit der Schicht (d) verschweißt ist.

11. Kochgeschirr nach Anspruch 10, wobei auf die Schicht (a) (600') eine Antihaftoberfläche aufgetragen ist.

12. Kochgeschirr nach Anspruch 11, wobei die Schicht (e) eine eloxierte Oberfläche aufweist.

13. Verfahren zur Herstellung von Kochgeschirr, das aus einem mehrschichtigen Kompositmetallblech (2) besteht, das **dadurch gekennzeichnet ist, dass** es folgende Schritte umfasst:
(a) Bereitstellen einer Vielzahl von Metallblechen, die eine Kernschicht (4) umfassen, die ein Blech aus Titan, einer Titanlegierung oder rostfreiem Stahl umfasst, sowie zwei Bleche (6), (6'), die aus der Gruppe ausgewählt werden, die aus reinem Aluminium und Alclad- Aluminium besteht;
(b) Vorbereiten der Metallbleche durch Entfernen einer Oxidoberflächenschicht von den Oberflächen derselben;
(c) Aufschichten der Metallbleche in einer geordneten Anordnung, so dass benachbarte Bleche mit Oberflächen, die in Schritt (b) vorbereitet wurden, einander zugewandt sind und wobei das Blech aus Titan, einer Titanlegierung oder aus rostfreiem Stahl zwischen den Schichten (6), (6') aus Blechen aus reinem Aluminium oder Alclad-Aluminium angeordnet wird und eine Kernschicht (4) der geordneten Anordnung bildet;
(d) Erwärmen der geordneten Anordnung auf eine gleichmäßige Walztemperatur in der gesamten Anordnung;
(e) Walzen der geordneten Anordnung auf eine gewünschte Dicke, um ein walzplattiertes Kompositblech (2) zu bilden; und
(f) Tiefziehen des walzplattierten Kompositmaterials, um ein Kochgeschirr mit einer gewünschten Konfiguration zu bilden, wodurch die Kernschicht (4) Wärmefluss in Querrichtung hemmt, um die Kernschicht (4) zu veranlassen, Wärme in Längsrichtung zu verteilen und **dadurch** eine gleichförmige Erwärmung der gesamten Kochfläche des Kochgeschirrs bereitzustellen, die keine überhitzten Stellen aufweist.

14. Verfahren nach Anspruch 13, wobei die geordnete Anordnung des Aufschichtungsschritts (c) Folgendes umfasst: ein erstes Blech (8) aus rostfreiem Stahl, das einem ersten Blech (6') aus reinem Aluminium oder Alclad-Aluminium zugewandt ist, eine Kernschicht (4) aus Blech aus Titan oder einer Titanlegierung, dessen erste Seite dem ersten Blech (6') aus Aluminium oder Alclad-Aluminium zugewandt ist, ein zweites Blech (6) aus reinem Aluminium oder Alclad-Aluminium, das einer zweiten Seite der Kernschicht (4) aus Titan oder einer Titanlegierung zugewandt ist, und ein zweites Blech (7) aus rostfreiem Stahl, das dem zweiten Blech (6) aus Aluminium oder Alclad-Aluminium zugewandt ist.

15. Verfahren nach einem der Ansprüche 13 bis 14, wobei die geordnete Anordnung in Schritt (d) in einer Ofenanlage oder einem Ofen, der atmosphärischen Sauerstoff enthält, auf eine Walztemperatur von 288° C bis 316° C erwärmt wird.

16. Verfahren nach einem der Ansprüche 13 bis 15, wobei der Walzschritt (e) Folgendes umfasst: eine erste Walzverringerung von mindestens 5 % bis etwa 10 %, gefolgt von einer erneuten Erwärmung auf etwa 288° C bis 316° C, Walzen eines zweiten Durchgangs und danach Wärmebehandlung bei etwa 343° C bis 371° C, um die Schweißkraft in dem mehrschichtigen Kompositmetallblech zu erhöhen.

17. Verfahren nach einem der Ansprüche 13 bis 16, das den Schritt des Auftragens einer Antihaftschicht (90) auf eine Kochfläche des Kochgeschirrs umfasst.

## Revendications

1. Un ustensile de cuisson fabriqué à partir d'une feuille de métal composite multicouche étirée (2), ladite feuille composite (2) comprenant une pluralité de couches métalliques colaminées, **caractérisé en ce qu'**il comprend une couche centrale (4) de titane, d'un alliage de titane ou d'acier inoxydable, ladite couche centrale (4) possédant un coefficient de conductivité thermique inférieur à celui des couches métalliques immédiatement adjacentes (6), (6') d'aluminium pur ou d'aluminium Alclad fixées des deux côtés de ladite couche centrale (4), grâce à quoi ladite couche centrale (4) retarde le flux thermique dans une direction transverse de façon à amener ladite couche centrale à répartir la chaleur dans une direction latérale et ainsi fournir un chauffage uniforme sur une surface de cuisson de l'ustensile de cuisson qui est exempte de points chauds.

2. Un ustensile de cuisson selon la Revendication 1, de la forme d'un récipient de cuisson ou d'une plaque chauffante, où une couche (8) d'acier inoxydable est fixée à une première couche parmi les couches d'aluminium pur ou d'aluminium Alclad (6') de façon à définir une surface de cuisson, et une couche (7) d'un matériau parmi un acier inoxydable austénitique ou un matériau ferromagnétique est fixée à une deuxième couche parmi les couches d'aluminium pur ou d'aluminium Alclad (6) de façon à définir une couche extérieure destinée à être positionnée de manière adjacente à une source de chaleur.

3. Un ustensile de cuisson selon la Revendication 1, où l'ustensile de cuisson est fabriqué à partir d'un métal composite laminé (2) **caractérisé en ce qu'**il comprend :
(a) une couche centrale (4) d'acier inoxydable,
(b) des couches supérieure et inférieure (6'), (6) se composant d'aluminium pur ou d'aluminium Alclad, chaque couche étant colaminé sur des côtés supérieur et inférieur de ladite couche centrale,
(c) une autre couche (8) d'acier inoxydable colaminée à la couche supérieure (6') d'aluminium pur ou d'aluminium Alclad de façon à définir une surface de cuisson dudit ustensile de cuisson, et
(d) une autre couche (7) d'acier inoxydable ou d'aluminium colaminée à la couche inférieure (6) d'aluminium pur ou d'aluminium Alclad de façon à définir une surface extérieure dudit ustensile de cuisson.

4. L'ustensile de cuisson selon la Revendication 3, où ladite autre couche (7) définissant la surface extérieure dudit ustensile de cuisson est une couche d'aluminium anodisé.

5. L'ustensile de cuisson selon la Revendication 3 ou 4, où l'autre couche (8) qui définit la surface de cuisson possède une couche non adhésive (90) appliquée sur celui-ci.

6. L'ustensile de cuisson selon la Revendication 1, où l'ustensile de cuisson est fabriqué à partir d'un métal composite laminé (2) comprenant :
(a) une couche centrale (4) se composant de titane ou d'un alliage de titane, et
(b) deux couches extérieures (6'), (6) se composant d'aluminium pur ou d'aluminium Alclad, chaque couche étant colaminée aux côtés supérieur et inférieur de ladite couche centrale (4).

7. L'ustensile de cuisson selon l'une quelconque des Revendications 3, 5 ou 6, où l'autre couche (7) définissant la surface extérieure dudit ustensile de cuisson est une couche d'acier inoxydable ferromagnétique, grâce à laquelle l'ustensile de cuisson peut être chauffé par induction.

8. L'ustensile de cuisson selon la Revendication 7, où l'autre couche (7) d'acier inoxydable ferromagnétique possède un fini de surface brossé.

9. L'ustensile de cuisson selon la Revendication 8, où l'autre couche (8) qui définit la surface de cuisson possède une couche non adhésive (90) appliquée sur celui-ci.

10. L'ustensile de cuisson selon la Revendication 1, où l'ustensile de cuisson est fabriqué à partir d'un métal composite laminé (200) comprenant :
(a) une couche (600') d'aluminium pur ou d'aluminium Alclad,
(b) une couche (400) d'acier inoxydable fixée à la couche (a),
(c) une couche (600) d'aluminium pur ou d'aluminium Alclad fixée à la couche (b),
(d) une couche (700) d'acier inoxydable fixée à la couche (c), et
(e) une couche d'aluminium pur ou d'aluminium Alclad fixée à la couche (d).

11. L'ustensile de cuisson selon la Revendication 10, où la couche (a) (600') possède une surface non adhésive appliquée sur celle-ci.

12. L'ustensile de cuisson selon la Revendication 11, où la couche (e) possède une surface anodisée.

13. Un procédé de fabrication d'un ustensile de cuisson fabriqué à partir d'une feuille de métal composite multicouche (2) **caractérisé en ce qu'**il comprend les opérations suivantes :
(a) la fourniture d'une pluralité de feuilles de métal dotées d'une couche centrale (4) comprenant une feuille de titane, d'un alliage de titane ou d'acier inoxydable et deux feuilles (6), (6') sélectionnées dans le groupe se composant d'aluminium pur et d'aluminium Alclad,
(b) la préparation desdites feuilles de métal par le retrait d'une couche de surface d'oxyde des surfaces de celles-ci,
(c) l'empilage desdites feuilles de métal dans une formation ordonnée de sorte que des feuilles adjacentes possédant des surfaces préparées selon l'opération (b) se font face à face et où la feuille de titane, d'un alliage de titane ou d'acier inoxydable est insérée entre les couches (6), (6') de feuilles d'aluminium pur ou d'aluminium Alclad et forme une couche centrale (4) de la formation ordonnée,
(d) le chauffage de ladite formation ordonnée à une température de laminage uniforme sur l'ensemble de ladite formation,
(e) le laminage de ladite formation ordonnée à une épaisseur souhaitée de façon à former une feuille composite colaminée (2), et
(f) l'étirage dudit composite colaminé de façon à former un ustensile de cuisson d'une configuration souhaitée, grâce à quoi la couche centrale (4) retarde le flux thermique dans une direction transverse de façon à amener ladite couche (4) à répartir la chaleur dans une direction latérale et ainsi fournir un chauffage uniforme sur une surface de cuisson de l'ustensile de cuisson qui est exempte de points chauds.

14. Le procédé selon la Revendication 13, où la formation ordonnée de l'opération d'empilage (c) comprend : une première feuille (8) d'acier inoxydable faisant face à une première feuille (6') d'aluminium pur ou d'aluminium Alclad, une couche centrale (4) d'une feuille de titane ou d'un alliage de titane possédant un premier côté faisant face à la première feuille (6') d'aluminium ou d'aluminium Alclad, une deuxième feuille (6) d'aluminium pur ou d'aluminium Alclad faisant face à un deuxième côté de la couche centrale (4) de titane ou d'un alliage de titane, et une deuxième feuille (7) d'acier inoxydable faisant face à la deuxième feuille (6) d'aluminium ou d'aluminium Alclad.

15. Un procédé selon l'une quelconque des Revendications 13 ou 14, où, à l'opération (d), la formation ordonnée est chauffée dans un fourneau ou un four contenant de l'oxygène de l'air à une température de laminage située entre 288 et 316°C (550 à 600°F).

16. Un procédé selon l'une quelconque des Revendications 13 à 15, où l'opération de laminage (e) comprend une première réduction de laminage d'au moins 5% à environ 10% suivie par un réchauffage à environ 288 à 316°C (550 à 600°F), un laminage d'une deuxième passe et ensuite un traitement thermique à environ 343 à 371 °C (650 à 700°F) de façon à améliorer la résistance de liaison dans la feuille de métal composite multicouche.

17. Le procédé selon l'une quelconque des Revendications 13 à 16 comprenant l'opération d'application d'une couche non adhésive (90) à une surface de cuisson de l'ustensile de cuisson.
